# EUROPÄISCHE PATENTSCHRIFT

(11) **EP 4 192 639 B1**
(45) Veröffentlichungstag und Bekanntmachung des Hinweises auf die Patenterteilung: **09.10.2024**
(21) Anmeldenummer: 21763258.7
(22) Anmeldetag: 06.08.2021
(51) Int. Cl.: B22D 41/16, B22D 11/103, B22D 11/106, B22D 11/113, B22D 41/00, B22D 41/04, B22D 41/08, B22D 41/14, B22D 41/50, B22D 41/12

(54) **VORRICHTUNG ZUR AUTOMATISCHEN STEUERUNG EINER STOPFENGIESSVORRICHTUNG SOWIE ANLAGE ZUM CHARGIEREN, SCHMELZEN UND GIESSEN VON METALL UND METALL-LEGIERUNGEN UNTER VAKUUM UND/ODER SCHUTZGASATMOSPHÄRE**
DEVICE FOR AUTOMATICALLY CONTROLLING A STOPPER CASTING DEVICE, AND SYSTEM FOR CHARGING, MELTING, AND CASTING METAL AND METAL ALLOYS UNDER A VACUUM AND/OR A PROTECTIVE GAS ATMOSPHERE
DISPOSITIF DE COMMANDE AUTOMATIQUE DE DISPOSITIF DE COULÉE À QUENOUILLE, ET SYSTÈME DE CHARGE, DE FUSION ET DE COULÉE DE MÉTAL ET D'ALLIAGES MÉTALLIQUES SOUS VIDE ET/OU ATMOSPHÈRE DE GAZ PROTECTEUR

(30) Priorität: 06.08.2020 DE 102020209989
(43) Veröffentlichungstag der Anmeldung: 14.06.2023
(73) Patentinhaber: SMS group GmbH, 41069 Mönchengladbach (DE)
(72) Erfinder: DEMIRCI, Cihangir, 47807 Krefeld (DE); MELLINGHOFF, Ben, 41068 Mönchengladbach (DE); WISSEN, Christoph, 47259 Duisburg (DE)
(74) Vertreter: Kross, Ulrich
(86) Internationale Anmeldenummer: PCT/EP2021/072031
(87) Internationale Veröffentlichungsnummer: WO 2022/029302

(56) Entgegenhaltungen:
- CH-A- 509 846
- CN-A- 102 133 633
- CN-U- 203 076 576
- DE-A1- 3 917 403
- DE-C2- 3 917 403
- GB-A- 1 483 024
- JP-A- S63 242 446
- KR-B1- 100 654 891
- KR-B1- 100 654 891
- KR-B1- 101 320 356
- US-A- 5 312 090

## Beschreibung

Die Erfindung betrifft eine Vorrichtung zur automatischen Steuerung einer Stopfengießvorrichtung in einer Vakuum-Induktions-Gießeinrichtung zur Regelung des Schmelzebadspiegels innerhalb einer Gießform oder eines Zwischenbehälters oder eines Gießverteilers.

Die Erfindung betrifft schließlich eine Anlage zum Chargieren, Schmelzen und Gießen von Metall und Metall-Legierungen unter Vakuum und/oder Schutzgasatmosphäre umfassend wenigstens eine Vakuum-Induktions-Schmelzeinrichtung, wobei die Anlage vakuumdicht an eine Stranggießanlage, eine Pulververdüsungsanlage oder ein anderes nachgeschaltetes Aggregat angeschlossen ist.

Aus der DE 1 952 083 A ist eine Vakuum-Induktions-Gießeinrichtung bekannt, die vakuumdicht an eine Stranggießanlage angeschlossen ist. Die DE 1 952 083 A beschreibt insbesondere ein unter Vakuum durchgeführtes Stranggussverfahren zum Vergießen von Metallen oder anderen Materialien, die eine Entgasung erfordern und die in der Wärme in Gegenwart normaler atmosphärischer Bedingungen reagieren. Diese Anlage weist eine Vakuumkammer auf, in der eine Pfanne als Vorratsbehälter für das flüssige Metall angeordnet ist. Unter der Pfanne ist ein Verteiler in Form eines Trichters angeordnet, der das flüssige Metall aufnimmt und es in einen Zulauf verteilt, der ein gleichmäßiges Vergießen des flüssigen Metalls aus dem Verteiler in eine Kokille einer Stranggießanlage ermöglicht, die als Form für das durchlaufende flüssige Metall dient. Bei dem bekannten Verfahren erfolgt das Gießen unter Vakuum. Die Pfanne ist mit einem Kegelverschluss ausgestattet, der einen konischen Verschlusskörper aufweist, welcher mit einem entsprechend konisch ausgeführten Teil der Gießdüse zusammenwirkt.

Weiterer Stand der Technik ist aus den Druckschriften DE 11 2009 001 950 T5, EP 0 518 536 A1, KR 10-1090429, US 3,779,743, US 3,888,300, WO 2015/101552 A1, DE 20 174 69 A1, DE 36 40 269 C1, EP 0 869 854 B1, EP 1 042 087 B1, JP 2013 039 588 A, US 6,070,649 und US 2016/0052049 A1 bekannt.

Insbesondere beim quasi kontinuierlichen Schmelzen und Gießen von Metall unter Vakuum und/oder Schutzgasatmosphäre ist es wünschenswert, den Spiegel des Schmelzbads in einem nachgeschalteten Aggregat bzw. in einer nachgeschalteten Anlage in gewissen Grenzen konstant zu halten, damit eine nachgeschaltete Anlage, beispielsweise eine Stranggießanlage oder insbesondere auch eine Pulververdüsungsanlage konstant und gleichmäßig mit Schmelze beschickbar ist.

Aus der JP S63 242 446 A ist die Regelung eines Schmelzepegels zwischen Kühltrommeln eines nachgeschalteten Aggregats bekannt, wobei die Regelung umfasst, dass innerhalb des Zwischenbehälters eine gesteuerte Gasdruckbeaufschlagung der Schmelze erfolgt.

Aus der KR 100 654 891 B1 ist eine Stopfengießvorrichtung an einem Gießbehälter bekannt, an welcher die Verstellung der Stopfenstange in Abhängigkeit des Schmelzepegels in einer nachgeschalteten Kokille gesteuert wird, wobei der Schmelzepegel in der Kokille mittels eines Signalgebers erfasst wird, der eine Verstellung der Stopfenstange bewirkt.

Weiterer Stand der Technik ist aus den Dokumenten DE 39 17 403 A1, CH 509 846 A, GB 1 483 024 A, US 5,312,090 A und CN 203076576 U bekannt.

Der Erfindung liegt die Aufgabe zugrunde, eine Vorrichtung zur Durchführung des Verfahrens sowie eine Anlage mit einer solchen Vorrichtung bereitzustellen.

Die Aufgabe wird gelöst durch die Merkmale des Anspruchs 1. Vorteilhafte Ausgestaltungen der Erfindung ergeben sich aus den Unteransprüchen.

Nach einem nicht beanspruchten Aspekt wird ein Verfahren zur Regelung einer Stopfengießvorrichtung einer Vakuum-Induktions-Gießeinrichtung in Abhängigkeit des Schmelzebadspiegels innerhalb einer Gießform oder eines Zwischenbehälters oder eines Gießverteilers bereitgestellt, wobei das Verfahren die Erfassung des Schmelzebadspiegels innerhalb einer Gießform oder innerhalb eines Zwischenbehälters oder innerhalb eines Gießverteilers unter Anwendung wenigstens eines optischen und oder akustischen Messverfahrens und die Verstellung einer Stopfenstange der Stopfengießvorrichtung in wenigstens einer Achse bezüglich einer Gießdüse in Abhängigkeit der Höhe des Schmelzebadspiegels umfasst, wobei die Regelung mit Rückkopplung einer Ist-Stellung der Stopfenstange erfolgt und wenigstens eine vorzugsweise induktive Erfassung der Ist-Stellung der Stopfenstange unter Vakuum und/oder Schutzgasatmosphäre vorgesehen ist.

Das Verfahren ist grundsätzlich auch anwendbar bei Vakuum-Induktions-Schmelzeinrichtungen, Vakuumvorherdspeicheröfen mit Stopfengießvorrichtung oder Vakuumrinnen und Verteilerrinnen, die an Stranggießanlagen oder dergleichen unter Vakuum oder Schutzgasatmosphäre mit unterschiedlichen Drücken betrieben werden.

Das Verfahren eignet sich insbesondere zur Regelung des Schmelzebadspiegels in Kokillen von Stranggießanlagen oder einem Vorratstrichter einer Pulververdüsungsanlage.

Bei einer vorteilhaften Ausgestaltung des Verfahrens gemäß der Erfindung ist vorgesehen, dass der Schmelzebadspiegel mittels Laser-Abstandsmessungen und/oder Ultraschall gemessen wird und einer Regel- und Steuereinrichtung zum Steuern der Stopfenstange zugeführt wird.

Bevorzugt ist eine radiale und/oder axiale Verstellung der Stopfenstange der Stopfengießvorrichtung vorgesehen.

Ein weiterer Gesichtspunkt der Erfindung betrifft eine Vorrichtung zur automatischen Steuerung einer Stopfengießvorrichtung in einer Vakuum-Induktions-Gießeinrichtung zur Regelung des Schmelzebadspiegels innerhalb einer Gießform oder innerhalb eines Zwischenbehälters oder innerhalb eines Gießverteilers, wobei die Vorrichtung wenigstens eine axial und/oder radial verstellbare Stopfenstange umfasst, die mit einer Gießdüse der Vakuum-Induktions-Gießeinrichtung zusammenwirkt, weiterhin umfassend wenigstens einen Antrieb für die Stopfenstange, Mittel zur Erfassung des Schmelzebadspiegels innerhalb einer Gießform oder eines Zwischenbehälters oder eines Gießverteilers und Mittel zur Steuerung der Stellung der Stopfenstange in Abhängigkeit des Schmelzebadspiegels.

Die Vorrichtung zeichnet sich dadurch aus, dass die Stopfenstange in einer Stopfenkammer geführt ist, die außerhalb eines Speichervolumens der Vakuum-Induktions-Gießeinrichtung angeordnet ist und die dazu ausgebildet ist, die Stopfenstange unter Vakuum und/oder unter Schutzgasatmosphäre zu führen und/oder aufzunehmen.

Eine Gießdüse im Sinne der Erfindung kann einen trichterförmigen/konischen Teil (Kegelstein) und/oder ein Tauchrohr umfassen.

Erfindungsgemäß ist die Stopfenkammer an einen Anschluss mit einer Öffnung oder einer Durchführung in einer Wand der Vakuum-Induktions-Gießeinrichtung gasdicht angeflanscht.

Bei einer zweckmäßigen Variante der Vorrichtung gemäß der Erfindung ist vorgesehen, dass die Stopfenkammer mittels wenigstens eines Schiebers, vorzugsweise mittels wenigstens eines feuerfesten Drehschiebers bzw. einer feuerfesten Drehschieberplatte, zu einer Speicherkammer der Vakuum-Induktions-Gießeinrichtung verschließbar ist.

Die Vakuum-Induktions-Gießeinrichtung umfasst eine Speicherkammer und einen mit der Speicherkammer kommunizierenden Vorherd, die ein Volumen zur Aufnahme der Schmelze bilden. In dem Vorherd kann beispielsweise wenigstens eine Stopfengießvorrichtung angeordnet sein.

Ein weiterer Gesichtspunkt der Erfindung betrifft schließlich eine Anlage zum Chargieren, Schmelzen und Gießen von Metall und Metall-Legierungen unter Vakuum und/oder Schutzgasatmosphäre umfassend wenigstens eine Vakuum-Induktions-Schmelzeinrichtung, Mittel zum Chargieren von Ausgangsstoffen unter Vakuum und/oder Schutzgasatmosphäre in die wenigstens eine Vakuum-Induktions-Schmelzeinrichtung, mit einer Vakuum-Induktions-Gießeinrichtung, die an die wenigstens eine Vakuum-Induktions-Schmelzeinrichtung anschließbar ist, wobei die Vakuum-Induktions-Gießeinrichtung wenigstens eine Speicherkammer mit einem Vorherd umfasst, der gasdicht an eine Stranggießanlage oder eine Pulververdüsungsanlage als nachgeschaltetes Aggregat ankoppelbar ist, wobei der Vorherd wenigstens eine Stopfengießvorrichtung aufweist, die dazu ausgebildet ist, die Schmelze unter Vakuum und/oder Schutzgas in das nachgeschaltete Aggregat zu übergeben und die Stopfengießvorrichtung eine Vorrichtung zur automatischen Regelung des Badspiegels innerhalb einer Gießform oder innerhalb eines Zwischenbehälters oder innerhalb eines Gießverteilers umfasst.

Hierzu ist vorzugsweise wenigstens eine Regel- und Steuereinrichtung für die Stopfengießvorrichtung vorgesehen.

Bei einer besonders vorteilhaften Ausgestaltung der Anlage gemäß der Erfindung umfasst diese wenigstens zwei Vakuum-Induktions-Schmelzeinrichtungen, die gasdicht an die Vakuum-Induktions-Gießeinrichtung anschließbar sind und die dazu ausgebildet sind, wechselweise jeweils einen Gießverteiler zu beschicken, der die Schmelze unter Vakuum und/oder Schutzgas der Speicherkammer der Vakuum-Induktions-Gießeinrichtung übergibt.

Bei einer bevorzugten und vorteilhaften Variante der Anlage gemäß der Erfindung ist vorgesehen, dass die Vakuum-Induktions-Gießeinrichtung um eine Kippachse drehbar gelagert ist, derart, dass die Schmelze von dem Vorherd in die Speicherkammer und zurück verlagerbar ist. Dabei kann zusätzlich vorgesehen sein, dass die Vakuum-Induktions-Gießeinrichtung quer zu der Kippachse verfahrbar ist. Durch diese Konfiguration ist es möglich, die Stopfengießvorrichtung und/oder die Gießtrichterdüse von Zeit zu Zeit zu warten und/oder zu erneuern.

Die Erfindung wird nachstehend anhand eines Ausführungsbeispiels in den beigefügten Zeichnungen erläutert.

Es zeigen:
- Figur 1: eine Ansicht einer Anlage gemäß der Erfindung,
- Figur 2: eine schematische Darstellung einer vertikalen Stranggießanlage als nachgeschaltetes Aggregat,
- Figur 3: eine schematische Darstellung einer horizontalen Stranggießanlage als nachgeschaltetes Aggregat,
- Figur 4: eine schematische Darstellung einer Kreisbogen Stranggießanlage als nachgeschaltetes Aggregat,
- Figur 5: eine schematische Darstellung einer Gieß-Walzanlage als nachgeschaltetes Aggregat,
- Figur 6: eine schematische Darstellung einer Pulververdüsungsanlage als nachgeschaltetes Aggregat,
- Figur 7: eine schematische Schnittansicht der Anlage gemäß Figur 1 entlang der Schnittebene VI-VI in Figur 1 und
- Figur 8: eine schematische Schnittansicht einer Vakuum-Induktions-Gießeinrichtung gemäß der Erfindung, die die Funktionsweise der Stopfenregelung gemäß der Erfindung veranschaulicht.

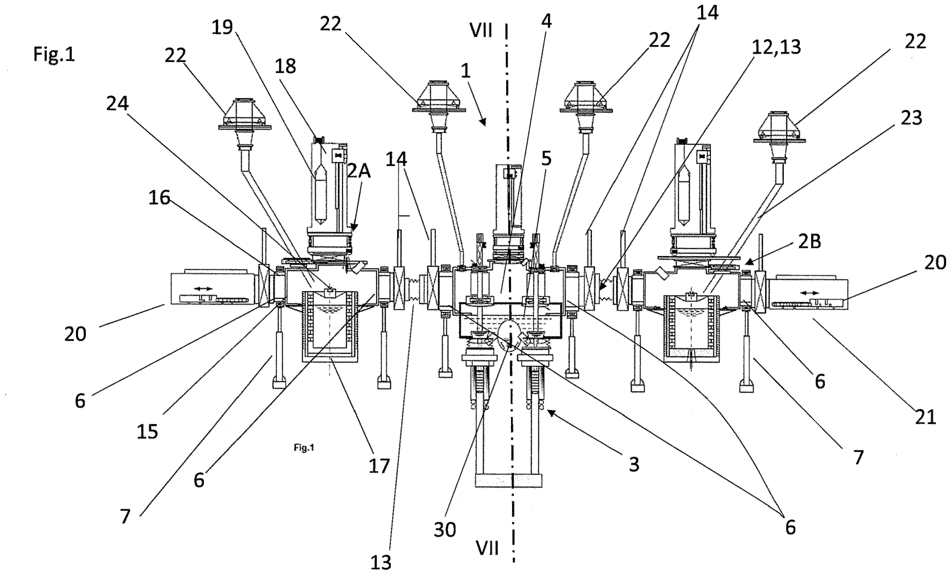

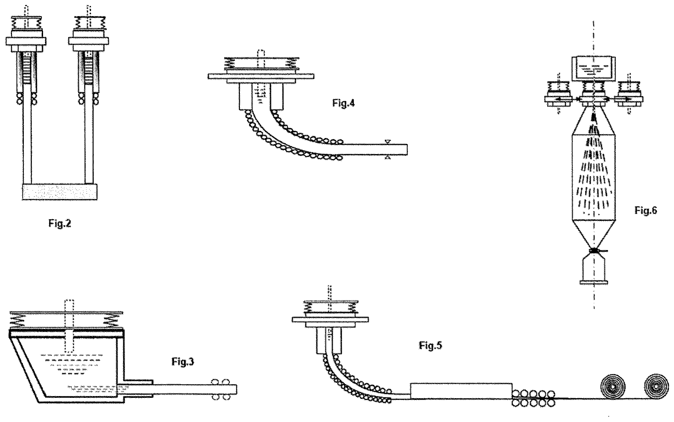

Die in Figur 1 dargestellte Anlage umfasst eine Vakuum-Induktions-Gießeinrichtung 1 und zwei an die Vakuum-Induktions-Gießeinrichtung 1 angeschlossene Vakuum-Induktions-Schmelzeinrichtungen 2A, 2B, Bei dem dargestellten Ausführungsbeispiel ist die Vakuum-Induktions-Gießeinrichtung 1 an eine vertikale Stranggießanlage 3 als nachgeschaltetes Aggregat angekoppelt. Anstelle dieser vertikalen Stranggießanlage 3 können die in den Figuren 3-6 dargestellten Aggregate vorgesehen sein.

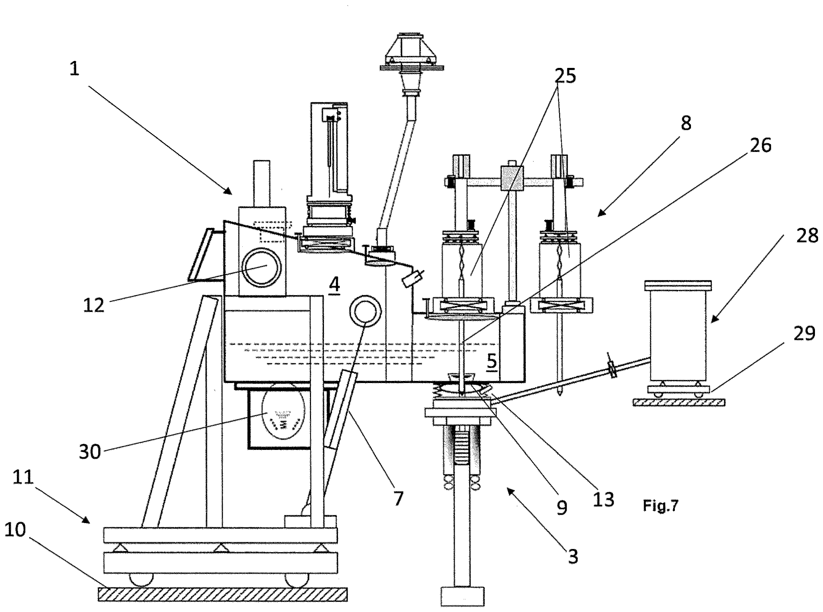

Wie dies insbesondere aus der Schnittansicht in Figur 7 erkennbar ist, umfasst die Vakuum-Induktions-Gießeinrichtung 1 eine Speicherkammer 4 und einen Vorherd 5, die miteinander kommunizieren. Innerhalb der Speicherkammer 4 ist ein Tiegelinduktor 30 angeordnet, der die Schmelze auf Gießtemperatur hält.

Die Anordnung umfassend die Speicherkammer 4 und den Vorherd 5 ist in Kipplagern 6 um eine horizontale Achse schwenkbar gelagert (siehe Figur 1) und mittels wenigstens einer Kolben-Zylinder-Anordnung 7 um die horizontale Achse drehbar gelagert.

Die Vakuum-Induktions-Gießeinrichtung 1 umfasst zwei Stopfengießvorrichtungen 8 sowie zugehörige Gießdüsen 9, über die schmelzflüssiges Metall an das jeweils nachgeschaltete Aggregat, beispielsweise an die vertikale Stranggießanlage 3, übergeben werden kann. Weiterhin ist die Vakuum-Induktions-Gießeinrichtung 1 auf einem auf Schienen 10 verfahrbaren Untergestell 11 angeordnet, über die die Vakuum-Induktions-Gießeinrichtung 1 quer ihrer Kippachse verfahrbar ist. Die Vakuum-Induktions-Gießeinrichtung 1 ist auf Wiegezellen des Untergestells 11 gelagert.

Die Speicherkammer 4 der Vakuum-Induktions-Gießeinrichtung 1 ist jeweils über seitliche Durchführungen 12, welche sich durch die Kipplager 6 erstrecken, an jeweils eine Vakuum-Induktions-Schmelzeinrichtung 2A, 2B angeschlossen. Die Verbindung zwischen den Vakuum-Induktions-Schmelzeinrichtungen 2A, 2B und der Speicherkammer 4 der Vakuum-Induktions-Gießeinrichtung 1 ist mittels Faltenbalgabdichtungen 13 verschlossen. Die Durchführungen 12 sind weiterhin mittels Vakuumschiebern 14 verschließbar.

Das Aufschmelzen der Ausgangsstoffe erfolgt in den Vakuum-Induktions-Schmelzeinrichtungen 2A, 2B, die die Schmelze an die Speicherkammer 4 der Vakuum-Induktions-Gießeinrichtung 1 übergeben. Die Vakuum-Induktions-Schmelzeinrichtungen 2A, 2B sind im Wesentlichen identisch, sodass nachstehend nur eine der Vakuum-Induktions-Schmelzeinrichtungen 2A, 2B beschrieben wird.

Jede der Vakuum-Induktions-Schmelzeinrichtungen 2A, 2B umfasst eine Ofenkammer 15, die Teil eines Oberofens 16 ist und die mit einem Schmelztiegel 17 gasdicht verschlossen ist. Der Schmelztiegel 17 ist in bekannter Art und Weise als induktiv beheiztes Schmelzgefäß ausgebildet. Dieser wird über ein nicht dargestelltes Schienensystem an den Oberofen 16 herangefahren und von unten an diesem befestigt. Der Schmelztiegel 17 wird bei dem dargestellten Beispiel in dem Oberofen 16 gehalten. Der Oberofen 16 ist in Kipplagern 6 schwenkbar gelagert und mittels zweier Kolben-Zylinder-Anordnungen 7 um eine horizontale Schwenkachse drehbar gelagert. An die Oberseite des Oberofens 16 ist ein Chargierturm 18 angeflanscht, der ebenfalls gasdicht anschließbar ist und als Schleuse für Chargierkörbe 19 dient, die das Ausgangsmaterial in den Schmelztiegel 17 einbringen. Seitlich an die Ofenkammer 15 ist eine Wechselkammer 20 angeschlossen, über die eine Verteilerrinne 21 als Gießverteiler in die Ofenkammer 15 einbringbar ist. Die Wechselkammer 20 ist ebenfalls als Schleusenkammer ausgebildet und über einen Vakuumschieber 14 bezüglich der Ofenkammer 15 absperrbar.

Mit dem Bezugszeichen 22 sind auf Wiegezellen gelagerte Bunkeranlagen bezeichnet, die Ausgangsstoffe oder Legierungszusätze über Beschickungsleitungen 23 dem Schmelztiegel 17 und/oder der Speicherkammer 4 aufgeben können. Die Bunkeranlagen 22 und/oder Beschickungsleitungen 23 können jeweils mittels nicht näher bezeichneter Vakuumschieber zu den Ofenkammern 15 und/oder zu der Speicherkammer 4 verschlossen werden.

Bei dem Verfahren gemäß der Erfindung werden zunächst Rohstoffe über Chargierkörbe 19 den Schmelztiegeln 17 unter Vakuum und/oder Schutzgasatmosphäre zugeführt und in diesen ebenfalls unter Vakuum und/oder Schutzgasatmosphäre aufgeschmolzen, gegebenenfalls unter Beschickung mit weiteren Legierungsbestandteilen. Nach abgeschlossener Behandlung der Schmelze in einem Schmelztiegel 17 wird beispielsweise in die Ofenkammer 15 einer Vakuum-Induktions-Schmelzeinrichtung 2A eine in einer Wechselkammer 20 vorgewärmte Verteilerrinne 21 in die Ofenkammer 15 so verbracht, dass diese sich unterhalb einer Gießschnauze 24 des Schmelztiegels 17 befindet. Die Verteilerrinne 21 ist so bemessen, dass diese sich in der Gießstellung bis in die Speicherkammer 4 erstreckt. Die Vakuum Induktions-Schmelzeinrichtungen 2A, 2B haben bezüglich der Speicherkammer 4 der Vakuum-Induktions-Gießeinrichtung 1 ein Gefälle von etwa 2°. Der Schmelztiegel 17 wird um die Kipplager 6 geschwenkt, sodass sich die Schmelze in diesem vollständig in die Verteilerrinne 21 entleeren kann. Die Schmelze gelangt durch die mittels Faltenbalgabdichtung 13 verschlossenen Durchführungen 12 von der Vakuum-Induktions-Schmelzeinrichtung 2A in die Vakuum-Induktions-Gießeinrichtung 1. Über eine Regelung der Stopfengießvorrichtung 8 in dem Vorherd 5 der Vakuum-Induktions-Gießeinrichtung 1 gelangt die Schmelze dann ebenfalls unter Vakuum und/oder Schutzgas in das nachgeschaltete Aggregat. Während die Schmelze in einer Vakuum-Induktions-Schmelzeinrichtung 2A gegossen wird, kann die Behandlung der Schmelze in der anderen Vakuum-Induktions-Schmelzeinrichtung 2B erfolgen, die anschließend die Schmelze zwecks Überführung in die Speicherkammer 4 der Vakuum-Induktions-Gießeinrichtung 1 in eine Verteilerrinne 21 gießt.

Über eine Stopfenregelung wird die flüssige Schmelze durch die Gießdüsen 9 beispielsweise in die Stranggießkokille der vertikalen Stranggießanlage 3 dosiert.

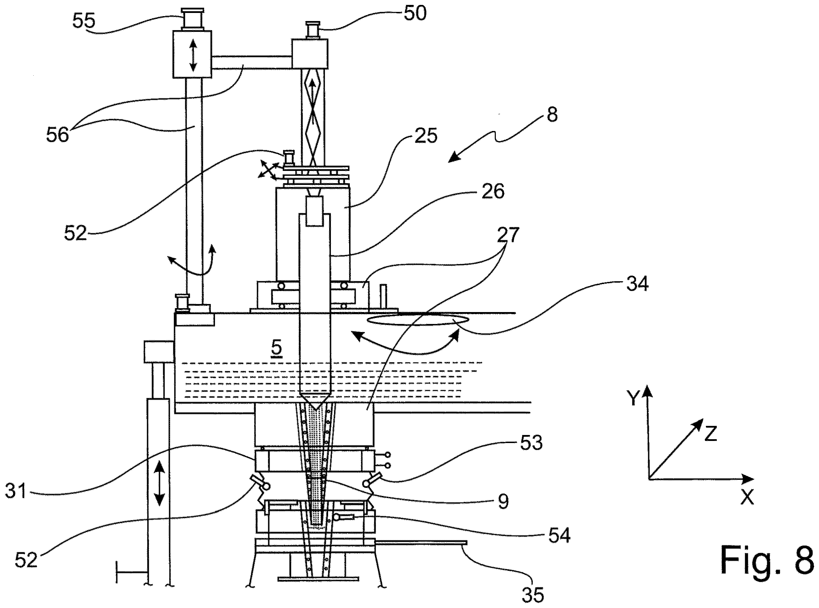

Die Stopfengießvorrichtung 8 umfasst in Stopfenkammern 25 geführte Stopfenstangen 26, die an ihrem führenden Ende einen Verschlusskörper bilden oder aufweisen und bei verschlossenen Gießdüsen 9 in diese eintauchen. Die Vakuumdichtigkeit der Stranggießkokillen wird über Vakuumflansche 27 gewährleistet, die Teil der in der Figur 8 dargestellten Faltenbalgabdichtung 13 sind.

Die Dosierung von Gießpulver in die Stranggießkokille bzw. auf die Schmelze unter Vakuum und/oder Schutzgas erfolgt durch mindestens eine vakuum- und schutzgasdichte Dosiereinrichtung 28, die auf Wiegezellen gelagert sowie auf einem verfahrbaren Wagen 29 angeordnet ist. Eine Dosierleitung, die gegen die Atmosphäre mit einem Vakuumventil geschützt ist, mündet in die Vakuumabdichtung der Schnittstelle zwischen der Vakuum-Induktions-Gießeinrichtung 1 und das nachgeschaltete Aggregat bzw. die nachgeschaltete Stranggießanlage 3.

Zum Wechsel der Gießdüse 9 und/oder der Stopfenstange 26 werden die Gießdüsen 9 mit dem Verschlusskörper der Stopfenstange 26 verschlossen, sodann wird die Vakuum-Induktions-Gießeinrichtung 1 gekippt, sodass die Schmelze sich von dem Vorherd 5 in die Speicherkammer 4 verlagert. Anschließend kann die Vakuum-Induktions-Gießeinrichtung 1 auf den Schienen 10 quer zu der Kippachse verlagert werden.

Die Funktionsweise der Stopfengießvorrichtung 8 sowie das erfindungsgemäße Verfahren zur Regelung des Schmelzebadspiegels und zur Steuerung der Stopfenstange 26 werden nachstehend unter Bezugnahme auf die Figur 8 erläutert.

Figur 8 zeigt eine Teil-Schnittansicht durch die Vakuum-Induktions-Gießeinrichtung 1 im Bereich des Vorherds 5 und einer dort angeordneten Stopfengießvorrichtung 8, die mit einer Gießdüse 9 zusammenwirkt. In Figur 8 ist nur eine einzige Stopfengießvorrichtung 8 mit der zugehörigen Gießdüse 9 dargestellt, die Vakuum-Induktions-Gießeinrichtung 1 kann jedoch eine Vielzahl von Stopfengießvorrichtungen 8 umfassen.

Der Vorherd 5 ist im Bereich der Gießdüse 9 über die Faltenbalgabdichtung 13 an das nachgeschaltete Aggregat, beispielsweise in Form einer Stranggießanlage 3 angeschlossen. Die Faltenbalgabdichtung 13 umfasst einen ersten und einen zweiten Dichtflansch 31,32, zwischen denen sich ein Balg 33 erstreckt. Die Dichtflansche sind jeweils mit feuerfesten Dichtringen (nicht dargestellt) gegen den Vakuumflansch 27 der Vakuum-Induktions-Gießeinrichtung 1 abgedichtet. Wie vorstehend bereits erwähnt, umfasst die Stopfengießvorrichtung 8 eine vertikal in der Stopfenkammer 25 geführte Stopfenstange 26, die an ihrem führenden Ende einen Verschlusskörper für die Gießdüse 9 bildet. Der Verschlusskörper kann einteilig mit der Stopfenstange 26 ausgebildet sein. Die Stopfenkammer 25 ist gasdicht im Bereich eine Durchführung für die Stopfenstange 26 durch die obere Wand des Vorherds 5 an diese angeflanscht, der mit dem Vakuumschieber 27 im Bereich der Durchführung verschließbar ist.

Die Stopfenstange 26 ist vertikal, d. h. in Richtung der in Figur 8 eingezeichneten y-Achse mittels eines ersten Antriebs 50, der beispielsweise als Spindeltrieb ausgebildet ist, verlagerbar. Der Durchfluss durch die Gießdüse 9 wird durch die Verlagerung der Stopfenstange 26 in der y-Achse bewirkt, wobei die Konizität des von der Stopfenstange 26 gebildeten Verschlusskörpers und der Gießdüse 9 so ausgebildet ist, dass über die Verlagerung der Stopfenstange 26 der Durchfluss durch die Gießdüsen 9 regelbar ist.

Über einen zweiten Antrieb 51 ist die Stopfenstange 26 mit einer an dieser vorgesehenen Führung in Bezug auf die Gießdüse 9 zentrierbar, d. h. in der x-z Ebene verstellbar.

Innerhalb der Faltenbalgabdichtung 13 zu dem nachgeschalteten Aggregat, beispielsweise zu der Stranggießanlage 3 sind wenigstens eine Kamera 52 sowie ein Laser Entfernungsmesser 53 angeordnet, die über ein nicht dargestelltes Schauglas und gegebenenfalls eine Anordnung von Spiegeln die Höhe des Schmelzebadspiegels innerhalb der Stranggießkokille oder innerhalb eines Zwischenbehälters für eine Pulververdüsungsanlage erfassen. Die Signale aus der Überwachung des Schmelzebadspiegels werden an eine nicht dargestellte Regel- und Steuereinrichtung für die Antriebe 50,51 der Stopfenstange 26 übertragen, deren Stellung innerhalb der Gießdüse 9 über einen Positionsgeber 54 erfasst wird, der die Position der Stopfenstange 26 an die Regel- und Steuereinrichtung zurück koppelt. Über die Regel- und Steuereinrichtung ist sowohl eine axiale Verstellung der Stopfenstange 26, d. h. in y Richtung als auch eine radiale Verstellung, d. h. in der x-z Ebene möglich.

Zum Wechseln der Stopfenstange 26 kann diese in die Stopfenkammer 25 eingefahren werden. Nach Verschließen des Vakuumschiebers 14 auf der Oberseite des Vorherds 5 und nach Zufahren eines feuerfesten Drehschiebers 34 innerhalb des Vorherds 5 kann die Stopfenkammer 25 mittels eines Gestänges 56 über einen dritten Antrieb 55 in der y-Achse verlagert werden und mittels eines vierten Antriebes 57 in der x-z Ebene verschwenkt werden.

Beim Abkoppeln der Vakuum-Induktions-Gießeinrichtung 1 von dem nachgeschalteten Aggregat (beispielsweise Stranggießanlage 3) kann dieses mittels des Schiebers 35 gasdicht verschlossen werden.

### Bezugszeichenliste

- 1: Vakuum-Induktions-Gießeinrichtung
- 2A, 2B: Vakuum-Induktions-Schmelzeinrichtungen
- 3: Stranggießanlage
- 4: Speicherkammer
- 5: Vorherd
- 6: Kipplager
- 7: Kolben-Zylinder-Anordnungen
- 8: Stopfengießvorrichtung
- 9: Gießdüsen
- 10: Schienen
- 11: Untergestell
- 12: Durchführungen
- 13: Faltenbalgabdichtungen
- 14: Vakuumschieber
- 15: Ofenkammer
- 16: Oberofen
- 17: Schmelztiegel
- 18: Chargierturm
- 19: Chargierkörbe
- 20: Wechselkammer
- 21: Verteilerrinne
- 22: Bunkeranlagen
- 23: Beschickungsleitungen
- 24: Gießschnauze
- 25: Stopfenkammern
- 26: Stopfenstangen
- 27: Vakuumflansch
- 28: Dosiereinrichtung
- 29: Wagen
- 30: Tiegelinduktor
- 31: erster Dichtflansch
- 32: zweiter Dichtflansch
- 33: Balg
- 34: Drehschieber
- 35: Schieber
- 50: erster Antrieb
- 51: zweiter Antrieb
- 52: Kamera
- 53: Laser-Entfernungsmesser
- 54: Positionsgeber
- 55: dritter Antrieb
- 56: Gestänge
- 57: vierter Antrieb

## Patentansprüche

1. Vorrichtung zur automatischen Steuerung einer Stopfengießvorrichtung (8) in einer Vakuum-Induktions-Gießeinrichtung (1) in Abhängigkeit der Höhe des Schmelzebadspiegels innerhalb einer Gießform oder eines Zwischenbehälters oder eines Gießverteilers unter Anwendung von mindestens einem optischen und/oder akustischen Messverfahren und durch die Verstellung einer Stopfenstange der Stopfengießvorrichtung (8) in mindestens einer Achse bezüglich einer Düse, wobei die Vakuum-Induktions-Gießeinrichtung (1) eine Speicherkammer (4) und einen mit der Speicherkammer (4) kommunizierenden Vorherd (5) umfasst, die ein Volumen zur Aufnahme der Schmelze bilden, wobei in dem Vorherd (5) wenigstens eine Stopfengießvorrichtung (8) zur Regelung des Schmelzebadspiegels innerhalb der Gießform oder des Zwischenbehälters oder des Gießverteilers vorgesehen ist, umfassend wenigstens eine verstellbare Stopfenstange (26) , die mit einer Gießdüse (9) der Vakuum-Induktions-Gießeinrichtung (1) zusammenwirkt, wenigstens einen Antrieb (50,51) für die Stopfenstange (26), Mittel zur Erfassung des Schmelzebadspiegels innerhalb der Gießform oder des Zwischenbehälters oder des Gießverteilers und Mittel zur Steuerung der Stellung der Stopfenstange (26) in Abhängigkeit des Schmelzebadspiegels, wobei die Stopfenstange (26) axial und radial verstellbar ausgebildet ist, wobei die Stopfenstange (26) in einer Stopfenkammer (25) geführt ist, die außerhalb eines Speichervolumens der Vakuum-Induktions-Gießeinrichtung (1) angeordnet ist und die dazu ausgebildet ist, die Stopfenstange (26) unter Vakuum und/oder unter Schutzgasatmosphäre zu führen und/oder aufzunehmen und wobei die Stopfenkammer (25) an einen Anschluss der Vakuum-Induktions-Gießeinrichtung (1) gasdicht angeflanscht ist.

2. Vorrichtung nach Anspruch 1, **dadurch gekennzeichnet, dass** die Stopfenkammer (25) mittels wenigstens eines Schiebers (35), vorzugsweise mittels wenigstens eines feuerfesten Drehschiebers (34), bezüglich einer Speicherkammer (4) und/oder eines Vorherds (5) der Vakuum-Induktions-Gießeinrichtung (1) verschließbar ist.

3. Anlage zum Chargieren, Schmelzen und Gießen von Metall und Metall-Legierungen unter Vakuum und/oder Schutzgasatmosphäre umfassend wenigstens eine Vakuum-Induktions-Schmelzeinrichtung (2A,2B), Mittel zum Chargieren von Ausgangsstoffen unter Vakuum und/oder Schutzgasatmosphäre in die wenigstens eine Vakuum-Induktions-Schmelzeinrichtung (2A,2B), mit einer Vakuum-Induktions-Gießeinrichtung (1), die an die wenigstens eine Vakuum-Induktions-Schmelzeinrichtung (2A,2B) anschließbar ist, wobei die Vakuum-Induktions-Gießeinrichtung (1) wenigstens eine Speicherkammer (4) mit einem Vorherd (5) umfasst, der mittels einer Faltenbalgabdichtung (13) gasdicht an eine Stranggießanlage (3) oder eine Pulververdüsungsanlage als nachgeschaltetes Aggregat ankoppelbar ist, wobei der Vorherd (5) wenigstens eine Stopfengießvorrichtung (8) aufweist, die dazu ausgebildet ist, die Schmelze unter Vakuum und/oder Schutzgas in das nachgeschaltete Aggregat zu übergeben und die Stopfengießvorrichtung (8) eine Vorrichtung gemäß Anspruch 1 zur automatischen Regelung des Schmelzebadspiegels innerhalb einer Gießform oder eines Zwischenbehälters oder eines Gießverteilers des nachgeschalteten Aggregats umfasst, die Mittel zur Erfassung des Schmelzebadspiegels innerhalb der Gießform oder des Zwischenbehälters oder des Gießverteilers und Mittel zur Steuerung der Stellung der Stopfenstange (26) in Abhängigkeit des Schmelzebadspiegels umfasst.

4. Anlage nach Anspruch 3, **dadurch gekennzeichnet, dass** die Vorrichtung zur automatischen Reglung des Schmelzebadspiegels die Merkmale eines oder mehrerer der Ansprüche 4 bis 5 aufweist.

5. Anlage nach einem der Ansprüche 3 oder 4, umfassend wenigstens zwei Vakuum-Induktions-Schmelzeinrichtungen (2A,2B), die gasdicht an die Vakuum-Induktions-Gießeinrichtung (1) anschließbar sind und die dazu ausgebildet sind, wechselweise jeweils einen Gießverteiler zu beschicken, der die Schmelze unter Vakuum und/oder Schutzgas der Speicherkammer (4) der Vakuum-Induktions-Gießeinrichtung (1) übergibt.

6. Anlage nach einem der Ansprüche 3 bis 5, **dadurch gekennzeichnet, dass** die Vakuum-Induktions-Gießeinrichtung (1) um eine Kippachse drehbar gelagert ist, derart, dass Schmelze von dem Vorherd (5) in die Speicherkammer (4) und zurück verlagerbar ist.

7. Anlage nach einem der Ansprüche 3 bis 6, **dadurch gekennzeichnet, dass** die Vakuum-Induktions-Gießeinrichtung (1) vorzugsweise quer zu der Kippachse verfahrbar ist.

## Claims

1. Device for automatic control of a stopper casting device (8) in vacuum induction casting equipment (1) in dependence on the height of the melt bath surface within a casting mould or a tundish or a pouring ladle with use of at least one optical and/or acoustic measuring method and through adjustment of a stopper rod of the stopper casting device (8) in at least one axis with respect to a nozzle, wherein the vacuum induction casting device (1) comprises a storage chamber (4) and a forehearth (5) communicating with the storage chamber (5), which define a volume for reception of the melt, wherein at least one stopper casting device (8) for regulation of the melt bath surface within the casting mould or the tundish or the pouring ladle is provided in the forehearth (5), comprising at least one adjustable stopper rod (26) which co-operates with a casting nozzle (9) of the vacuum induction casting device (1), at least one drive (50, 51) for the stopper rod (26), means for detecting the melt bath surface within the casting mould or the tundish or the pouring ladle and means for controlling the setting of the stopper rod (26) in dependence on the melt bath surface, wherein the stopper rod (26) is configured to be axially and radially adjustable, wherein the stopper rod (26) is guided in a stopper chamber (25) which is arranged outside a storage volume of the vacuum induction casting device (1) and is configured for the purpose of guiding and/or receiving the stopper rod (26) under vacuum and/or under a protective gas atmosphere and wherein the stopper chamber (25) is gas-tightly flange-mounted on a connection of the vacuum induction casting equipment (1).

2. Device according to claim 1, **characterised in that** the stopper chamber (25) is closable by means of at least one slide (35), preferably by means of at least one refractory rotary slide (24), with respect to a storage chamber (4) and/or a forehearth (5) of the vacuum induction casting equipment (1).

3. Plant for charging, melting and casting metal and metal alloys under vacuum and/or a protective gas atmosphere, comprising at least one vacuum induction smelting device (2A, 2B), means for charging starting materials under vacuum and/or a protective gas atmosphere into the at least one vacuum induction smelting device (2A, 2B), with vacuum induction casting equipment (1) connectible with the at least one vacuum induction smelting device (2A, 2B), wherein the vacuum induction casting equipment (1) comprises at least one storage chamber (4) with a forehearth (5), which can be gas-tightly coupled by means of a bellows seal (13) to a continuous casting plant (3) or a powder atomisation plant as a downstream unit, wherein the forehearth (5) comprises at least one stopper casting device (8) configured for the purpose of transferring the melt under vacuum and/or protective gas to the downstream unit and the stopper casting device (8) comprises a device according to claim 1 for automatic regulation of the melt bath surface within a casting mould or a tundish or a pouring ladle of the downstream unit, which comprises means for detection of the melt bath surface within the casting mould or tundish or pouring ladle and means for controlling the setting of the stopper rod (26) in dependence on the melt bath surface.

4. Plant according to claim 3, **characterised in that** the device for automatic regulation of the melt bath surface has the features of one or more of claims 1 and 2.

5. Plant according to one of claims 3 and 4, comprising at least two vacuum induction smelting devices (2A, 2B), which are gas-tightly connectible with the vacuum induction casting equipment (1) and which are configured for the purpose of respectively charging a pouring ladle in alternation, which transfers the melt under vacuum and/or protective gas to the storage chamber (4) of the vacuum induction casting equipment (1)

6. Plant according to one of claims 3 to 5, **characterised in that** the vacuum induction casting equipment (1) is mounted to be rotatable about a tilt axis in such a way that melt is displaceable from the forehearth (5) to the storage chamber (4) and back.

7. Plant according to one of claims 3 to 6, **characterised in that** the vacuum induction casting equipment (1) is preferably movable transversely to the tilt axis.

## Revendications

1. Dispositif pour la commande automatique d'un dispositif de coulée à bouchon (8) dans un dispositif de coulée par induction sous vide (1) en fonction de la hauteur du niveau du bain de fusion à l'intérieur d'un moule de coulée ou d'un récipient intermédiaire ou d'un distributeur de coulée, utilisant au moins un procédé de mesure optique et/ou acoustique et par l'ajustement d'une tige de bouchon du dispositif de coulée à bouchon (8) dans au moins un axe par rapport à une buse, le dispositif de coulée par induction sous vide (1) comprenant une chambre de stockage (4) et un avant-foyer (5) communiquant avec la chambre de stockage (4), formant un volume pour recevoir la fusion, dans lequel au moins un dispositif de coulée à bouchon (8) est prévu dans l'avant-foyer (5) pour réguler le niveau du bain de fusion à l'intérieur du moule de coulée ou du récipient intermédiaire ou du distributeur de coulée, comprenant au moins une tige de bouchon réglable (26), qui coopère avec une buse de coulée (9) du dispositif de coulée par induction sous vide (1), au moins un entraînement (50, 51) pour la tige de bouchon (26), des moyens pour détecter le niveau du bain de fusion à l'intérieur du moule de coulée ou du récipient intermédiaire ou du distributeur de coulée, et des moyens pour contrôler la position de la tige de bouchon (26) en fonction du niveau du bain de fusion, la tige de bouchon (26) étant conçue pour être réglable axialement et radialement, la tige de bouchon (26) étant guidée dans une chambre de bouchon (25) située à l'extérieur d'un volume de stockage du dispositif de coulée par induction sous vide (1) et conçue pour guider et/ou recevoir la tige de bouchon (26) sous vide et/ou sous atmosphère de gaz protecteur, et la chambre de bouchon (25) étant bridée de manière étanche au gaz à une connexion du dispositif de coulée par induction sous vide (1).

2. Dispositif selon la revendication 1, **caractérisé en ce que** la chambre de bouchon (25) peut être fermée par rapport à une chambre de stockage (4) et/ou à un avant-foyer (5) du dispositif de coulée par induction sous vide (1) au moyen d'au moins un coulisseau (35), de préférence au moyen d'au moins un coulisseau rotatif réfractaire (34).

3. Installation pour le chargement, la fusion et la coulée de métal et d'alliages métalliques sous vide et/ou sous atmosphère de gaz protecteur comprenant au moins un dispositif de fusion par induction sous vide (2A, 2B), des moyens pour charger des matières premières sous vide et/ou sous atmosphère de gaz protecteur dans au moins un dispositif de fusion par induction sous vide (2A, 2B), avec un dispositif de coulée par induction sous vide (1), qui peut être connecté au moins à un dispositif de fusion par induction sous vide (2A, 2B), le dispositif de coulée par induction sous vide (1) comprenant au moins une chambre de stockage (4) avec un avant-foyer (5), qui peut être connecté de manière étanche au gaz à une installation de coulée continue (3) ou à une installation de pulvérisation de poudre en tant qu'unité en aval au moyen d'un joint à soufflet (13), l'avant-foyer (5) ayant au moins un dispositif de coulée à bouchon (8) conçu pour transférer la fusion sous vide et/ou sous gaz protecteur à l'unité en aval, et le dispositif de coulée à bouchon (8) comprenant un dispositif selon la revendication 1 pour la régulation automatique du niveau du bain de fusion à l'intérieur d'un moule de coulée ou d'un récipient intermédiaire ou d'un distributeur de coulée de l'unité en aval, comprenant des moyens pour détecter le niveau du bain de fusion à l'intérieur du moule de coulée ou du récipient intermédiaire ou du distributeur de coulée et des moyens pour contrôler la position de la tige de bouchon (26) en fonction du niveau du bain de fusion.

4. Installation selon la revendication 3, **caractérisée en ce que** le dispositif pour la régulation automatique du niveau du bain de fusion présente les caractéristiques d'une ou plusieurs des revendications 4 à 5.

5. Installation selon l'une des revendications 3 ou 4, comprenant au moins deux dispositifs de fusion par induction sous vide (2A, 2B), qui peuvent être connectés de manière étanche au gaz au dispositif de coulée par induction sous vide (1) et qui sont conçus pour alimenter alternativement un distributeur de coulée, qui transfère la fusion sous vide et/ou sous gaz protecteur à la chambre de stockage (4) du dispositif de coulée par induction sous vide (1).

6. Installation selon l'une des revendications 3 à 5, **caractérisée en ce que** le dispositif de coulée par induction sous vide (1) est monté pivotant autour d'un axe de basculement, de sorte que la fusion peut être transférée de l'avant-foyer (5) à la chambre de stockage (4) et vice versa.

7. Installation selon l'une des revendications 3 à 6, **caractérisée en ce que** le dispositif de coulée par induction sous vide (1) est de préférence mobile transversalement à l'axe de basculement.
